# EUROPEAN PATENT APPLICATION

(11) **EP 4 324 552 A2**
(43) Date of publication of application: **21.02.2024**
(21) Application number: 23191632.1
(22) Date of filing: 16.08.2023
(51) Int. Cl.: B01J 20/02, B01J 20/22, B01J 20/28, B65D 75/20, B65D 81/26

(54) **HUMIDITY CONTROL SYSTEM**

(30) Priority: 15.08.2022 US 202217888340
(71) Applicant: Desiccare, Inc., Las Vegas NV 89139 (US)
(72) Inventor: GLORIOSO, Sammie Joe, Ridgeland, MS 39157 (US); BLANKENHORN, Benjamin Edward, Las Vegas, NV 89139 (US)
(74) Representative: Gevers Patents

(57) **Abstract**

A humidity control system including: a two-way humidity control material; a substantially pure plant extract blended with the two-way humidity control material to form a mixture; and a package housing the two-way humidity control material and the substantially pure plant extract, wherein the substantially pure plant extract is between about 0.025% and about 5.0% by weight of the mixture.

## Description

### CROSS-REFERENCE TO RELATED APPLICATION(S)

The present application is related to U.S. Patent Application Serial No. 16/447,046, filed June 20, 2019, the entire content of which is incorporated herein by reference.

### BACKGROUND

### 1. Field

The present disclosure relates generally to the field of humidity control. The present disclosure also relates generally to the field of modifying sensory perception in an environment, such as taste or smell.

### 2. Description of the Related Art

Humidity control products in general are well known. A desiccant is a hygroscopic substance that adsorbs moisture in an environment to modify (and maintain) a relative humidity in a particular environment. A humectant is a hygroscopic substance that absorbs moisture in an environment, which is also used to modify (and maintain) moisture in that environment. There are also two-way humidity control products (also called two-way humectants), such as glycerin water solutions and saturated salt solutions, which both absorb and adsorb moisture, allowing for the ambient relative humidity to be increased or decreased to a desired relative humidity.

Humidity control products may be used in various applications, such as preservation of food, herbs, pharmaceuticals and tobacco, for example. As such, it is often desirable to control humidity and other environmental factors concurrently. For example, it may be desirable to control both humidity and the scent of the surrounding environment, or to control both humidity and oxygen in the surrounding environment. In addition, certain flavored products may lose their efficacy over time, so it may be desirable to control humidity and to provide fragrance and flavor to the products themselves (e.g., infuse fragrance and flavor to the products) rather than merely scenting the surrounding environment.

Various plant extracts, such as terpenes and essential oils, are known to provide fragrance and/or flavor to products, such as food products or tobacco. However, such flavoring requires direct exposure to the product, for example by adding droplets of plant extracts directly to the product to be flavored or by vaporization of the plant extract. Additionally, plant extracts can be stored with products to scent the environment surrounding the products. However, plant extracts used to scent surrounding environments are typically used in small quantities and concentrations that are too small to infuse fragrance and flavor into the products themselves. Higher concentrations of plant extracts (e.g., 95-100% terpenes) are needed to infuse fragrance and flavor into the product stored with the plant extracts. However, high concentrations of plant extracts provide various challenges. For example, high concentrations of plant extracts, such as substantially pure terpenes or a mixture of substantially pure terpenes (e.g., 95-100% terpenes), are volatile and can evaporate quickly at elevated temperatures. Further, the higher concentrations of plant extracts can be cost prohibitive and may damage packaging containing the plant extracts.

### SUMMARY

A humidity control system according to one or more embodiments of the present disclosure is directed to a humidity controller, such as a humectant or a two-way humectant, with plant extracts, such as essential oils or terpenes, incorporated inside of a package that provides humidity control and provides flavor and/or scent to the surrounding environment and/or products in the surrounding environment. In one or more embodiments of the present disclosure, the humidity control system includes a two-way humidity controlling substance mixed with terpenes and housed in a package having a coating thereon. The package may include a porous material. In some embodiments, the coating is polyethylene. In some embodiments, the plant extract may be a terpene such as Linalool, Myrcene, and/or a-Pinene. In some embodiments, the plant extract may be a substantially pure terpene (e.g., 95-100% terpene) or a mixture of substantially pure terpenes (e.g., 95-100% terpenes).

The present invention provides a humidity control system comprising: a two-way humidity control material; a substantially pure plant extract blended with the two-way humidity control material to form a mixture; and a package housing the two-way humidity control material and the substantially pure plant extract.

In an embodiment of the humidity control system according to the present invention the package comprises a nonwoven fabric.

In an embodiment of the humidity control system according to the present invention the nonwoven fabric comprises polyethylene and/or polypropylene.

In an embodiment of the humidity control system according to the present invention the nonwoven fabric comprises polyethylene and a polypropylene spunbound material.

In an embodiment of the humidity control system according to the present invention the two-way humidity control material comprises a viscous miscible glycerol and water mix.

In an embodiment of the humidity control system according to the present invention the two-way humidity control material comprises a saturated salt solution.

In an embodiment of the humidity control system according to the present invention the humidity control system further comprises ascorbic acid, the ascorbic acid being housed in the package with the two-way humidity control material and the substantially pure plant extract.

In an embodiment of the humidity control system according to the present invention the humidity control system further comprises a humidity indicating card affixed to the package.

In an embodiment of the humidity control system according to the present invention the substantially pure plant extract is between about 0.025% and about 5.0% by weight of the mixture.

In an embodiment of the humidity control system according to the present invention the substantially pure plant extract comprises a substantially pure terpene.

In an embodiment of the humidity control system according to the present invention the substantially pure terpene comprises one or more of Linalool, Myrcene, a-Pinene, Humulene, and Beta-Caryophyllene.

The present invention also provides a method of flavoring a product and controlling humidity of an environment in a container, the method comprising: inserting a humidity control system in the container; and enclosing the product in the container. The humidity control system comprising: a two-way humidity control material; a substantially pure plant extract blended with the two-way humidity control material to form a mixture; and a package housing the two-way humidity control material and the substantially pure plant extract.

In an embodiment of the method according to the present invention the substantially pure plant extract is between about 0.025% and about 5.0% by weight of the mixture.

In an embodiment of the method according to the present invention the substantially pure plant extract comprises a substantially pure terpene.

In an embodiment of the method according to the present invention the substantially pure terpene comprises one or more of Linalool, Myrcene, a-Pinene, Humulene, and Beta-Caryophyllene.

In an embodiment of the method according to the present invention the substantially pure plant extract is 4% by weight of the mixture.

The present invention also provides method of manufacturing a humidity control mixture, the method comprising: adding water to a mixing container; activating an agitator in the mixing container; heating the mixing container to a first predetermined temperature; adding gelatin to the mixing container; adding glycerin to the mixing container; cooling the mixing container to a second predetermined temperature; adding a substantially pure plant extract to the mixing container; and activating a homogenizer in the mixing container.

In an embodiment of the method according to the present invention the first predetermined temperature has a range from about 95°F to about 98°F.

In an embodiment of the method according to the present invention the water added to the mixing container is about 99.24 lbs.

In an embodiment of the method according to the present invention the gelatin added to the mixing container has a range from about 1711.58 grams to about 1717.58.

In an embodiment of the method according to the present invention the method further comprises: after adding gelatin to the mixing container, activating the agitator at about 3015 revolutions per minute (RPM) for about 1 hour and 20 minutes.

In an embodiment of the method according to the present invention the glycerin added to the mixing container is about 196.98 lbs.

In an embodiment of the method according to the present invention the method further comprises: after adding glycerin to the mixing container, activating the agitator at about 3015 RPM for about 1 hour and 20 minutes using the agitator.

In an embodiment of the method according to the present invention the second predetermined temperature is about 80°F.

In an embodiment of the method according to the present invention the substantially pure plant extract added to the mixing container is about 15 lbs.

In an embodiment of the method according to the present invention the method further comprises: after adding the substantially pure plant extract to the mixing container, activating the homogenizer at about 1850 RPM for about 30 minutes.

In an embodiment of the method according to the present invention the method further comprises adding the humidity control mixture to a package.

In an embodiment of the method according to the present invention the substantially pure plant extract comprises a substantially pure terpene.

In an embodiment of the method according to the present invention the substantially pure terpene comprises one or more of Linalool, Myrcene, a-Pinene, Humulene, and Beta-Caryophyllene.

The present invention also provides a humidity indicating card comprising: a first surface comprising a humidity indicator; and a second surface, wherein the first surface and the second surface face different directions, and wherein the first surface and the second surface of the humidity indicating card are laminated with a laminated membrane configured to reduce leakage of chemicals in the humidity indicator.

In an embodiment of the humidity indicating card according to the present invention the laminating membrane comprises a polymer blend.

In an embodiment of the humidity indicating card according to the present invention the laminating membrane comprises at least one of: polyethylene, oriented polystyrene, a porous polyethylene resin, polyurethane, a polyether block amide, or a polymeric mixture including a hydrophilic monomer.

In an embodiment of the humidity indicating card according to the present invention the humidity indicator comprises three indicating dots.

In an embodiment of the humidity indicating card according to the present invention the humidity indicator comprises cobalt chloride, cobalt salts, bromide salt, and/or an indicating dye.

The present invention also provides a method for laminating a humidity indicating card, the method comprising: placing an upper laminating membrane on a first surface of the humidity indicating card comprising a humidity indicator; placing a lower laminating membrane on a second surface of the humidity indicating card, wherein the first surface and the second surface face different directions; heating the upper and lower laminating membranes using a first set of heating rollers; heating the upper and lower laminating membranes using a second set of heating rollers; removing an upper backing layer from the upper laminating membrane and a lower backing layer from the lower laminating membrane; and heating the upper and lower laminating membranes using an infrared heating apparatus for four seconds or less.

In an embodiment of the method according to the present invention the upper and lower laminating membranes comprise a polymer blend.

In an embodiment of the method according to the present invention the upper and lower laminating membranes comprise at least one of: polyethylene, oriented polystyrene, a porous polyethylene resin, polyurethane, a polyether block amide, or a polymeric mixture including a hydrophilic monomer.

In an embodiment of the method according to the present invention the humidity indicator comprises three indicating dots.

In an embodiment of the method according to the present invention the humidity indicator comprises cobalt chloride, cobalt salts, bromide salt, and/or an indicating dye.

In an embodiment of the method according to the present invention the first set of heating rollers comprise a first upper heating roller and a first lower heating roller, wherein the first upper heating roller is heated to a temperature of 220° Fahrenheit and the first lower heating roller is heated to a temperature of 235° Fahrenheit.

In an embodiment of the method according to the present invention the second set of heating rollers comprise a second upper heating roller and a second lower heating roller, wherein the second upper heating roller is heated to a temperature of 270° Fahrenheit and the second lower heating roller is heated to a temperature of 260° Fahrenheit.

### BRIEF DESCRIPTION OF THE DRAWINGS

These and other features and aspects of embodiments of the present disclosure will be better understood by reference to the following detailed description, when considered in conjunction with the accompanying drawings. The same numbers are used throughout the figures to reference like features and components. The figures are schematic in nature and may not be drawn to scale.
FIG. 1 illustrates a humidity control system according to one or more embodiments of the present disclosure.
FIG. 2 illustrates a cross-sectional view of the humidity control system of FIG. 1 taken along the line 2-2 of FIG. 1.
FIG. 3 illustrates a cross-sectional view of the humidity control system of FIG. 1 taken along the line 2-2 of FIG. 1 according to another embodiment of the present disclosure.
FIG. 4 illustrates a humidity control system in a closed environment according to one or more embodiments of the present disclosure.
FIGS. 5A and 5B show images of the mixing equipment according to some example embodiments of the present disclosure.
FIG. 6 shows an image of the laminating machine that can be used to laminate the humidity indicating card with the laminating membrane according to an embodiment of the present disclosure.
FIGS. 7A and 7B show images of the laminating machine performing some steps of the laminating process according to an embodiment of the present disclosure.
FIGS. 8A and 8B show images of the humidity indicating cards inserted into the upper and lower heating rollers according to an embodiment of the present disclosure.
FIGS. 9A and 9B show images of the humidity indicating cards inserted into capstan heating rollers according to an embodiment of the present disclosure.
FIGS. 10A and 10B show images of nylon being removed from upper and lower laminating membranes according to an embodiment of the present disclosure.
FIGS. 11A and 11B show images of the humidity indicating cards exposed to IR heat lamps according to an embodiment of the present disclosure.
FIG. 12 shows a humidity card laminated with a laminating membrane according to an embodiment of the present disclosure.

### DETAILED DESCRIPTION

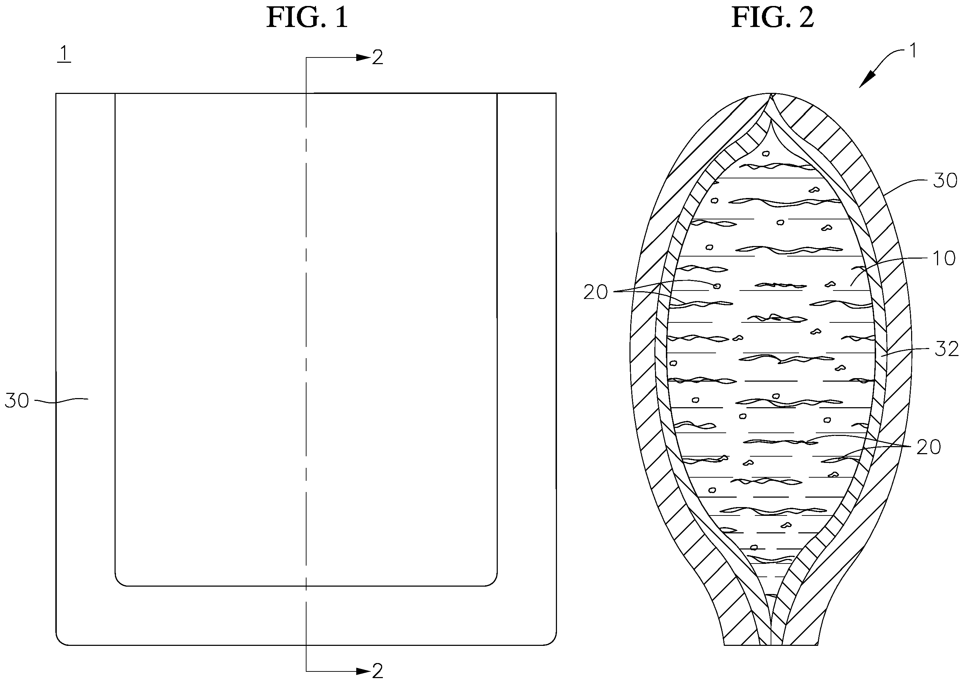

Referring to FIGS. 1 and 2, a humidity control system 1 includes a humidity control substance 10 and a plant extract (e.g., an unsaturated hydrocarbon found in plants and their essential oils) 20 in a package 30. The package 30 is made of a porous material which is permeable to vapor, and will pass vapor, but is impervious to liquid, dust and other particulates. For example, in one or more embodiments, kraft paper having a basis weight of 30 Ibs/msi (pounds per 1,000 square inches) or more is used for the package 30. As another example, the package may be an elastomeric polyester.

The package 30 may include a coating 32 (e.g., a microporous coating) between the package 30 and the humidity control substance 10 and the plant extract 20. The coating 32 is selected such that it provides adequate moisture vapor transmission (MVT) and seals the package 30. Thus, the coating 32 may also be used as an adhesive to join together opposing sides of the package 30 according to embodiments. The coating 32 also reduces or minimizes the likelihood of leakage of the humidity control substance 10 and the plant extract 20 through the package 30. The coating 32 may be polyethylene, oriented polystyrene, a porous polyethylene resin, polyurethane, a polyether block amide, and/or a polymeric mixture including a hydrophilic monomer. The coating 32 prevents or reduces the likelihood of the humidity control substance 10 and the plant extract 20 leaking from the package 30.

The coating 32 may be compliant with the Food and Drug Administration (FDA) standards, e.g., the regulations as stated in the Code of Federal Regulations, Title 21. For example, the coating 32 may omit any raw materials that are not included in the applicable sections of Title 21 of the Code of Federal Regulations. The thickness of the coating may range from between about 0.0005 inch and 0.01 inch, preferably between about 0.0005 inch and 0.002 inch, and more preferably 0.001 inch. As shown in Table 1, at varying thicknesses of the coating 32, the water vapor transmission rate (WVTR) of the humectant system may vary from about 16 g/100 sq. in/day to about 42 g/100 sq. in/day. It will be appreciated that a smaller thickness of the coating 32 reduces costs of materials and provides for faster MVT/WVTR, but that when the coating 32 has a thickness that is too small, the humidity control system 1 may experience leaks and the coating 32 may not exhibit sufficient adhesive qualities.

**Table 1**

| Thickness (inches) | FDA Compliant? | WVTR (g/100 sq. in/day) |
|---|---|---|
| 0.001 | Yes | 28 |
| 0.002 | Yes | 16 |
| 0.001 | No | 42 |
| 0.002 | No | 18 |

In some embodiments, a thicker coating may be desired. For example, in some embodiments, the coating 32 may be provided at a thickness of about 0.01 inch to provide for slower MVT for longer-term uses. As an example, in some embodiments, a thicker coating 32 may be used along with the plant extract 20, such as citronella oil, which is effective in repelling mosquitos, and provides for longer protection from mosquitos, e.g., for use on a lengthy backpacking or fishing trip.

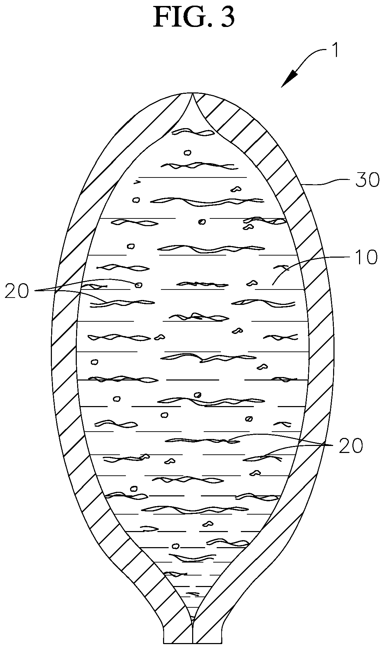

In some embodiments, the package 30 may be selected such that the coating 32 is not needed. For example, referring to FIG. 3, in some embodiments, the package 30 may include a nonwoven fabric including polyethylene and/or polypropylene. As such, the package 30 may adhere to itself, and provide for a faster WVTR because no additional coating is needed. In embodiments including the package 30 without the coating 32, the package 30 is sealed at a pressure (e.g., a predetermined pressure) that allows facing portions of the package 30 to seal to each other.

In some embodiments, the package 30 may include a nonwoven fabric including polyethylene and a polypropylene spunbound (PPSB) material. For example, a suitable nonwoven fabric is the MACTEX^{®} 203020 material (MACTEX^{®} is a registered trademark of Mactex, Incorporated). In some embodiments, a material with 20 grams per square meter (GSM) polyethylene + 30 GMS PPSB + 20 GSM polyethylene may be utilized.

The humidity control substance 10 may include a desiccant, an oxygen scavenger, an ethylene absorber, a one-way humectant, and/or a two-way humidity control product.

In some embodiments, the humidity control substance 10 may include a two way humidity control product, such as a saturated salt solution or a viscous miscible glycerol (or glycerin) and water mix. Humidity control systems including a viscous miscible glycerol and water mix to provide two way humidity control are described in U.S. Patent Nos. 9,616,381 and 9,616,382 to Desiccare, Inc., which are incorporated herein by reference in their entirety.

According to embodiments of the disclosure, the humidity control system 1 includes the plant extract 20. In some embodiments, the plant extract 20 may include a terpene, an essential oil, etc.

In some embodiments, the plant extract 20 may include at least one of the terpenes Linalool, Myrcene, a-Pinene, Humulene, Beta-Caryophyllene, and combinations thereof. The plant extract 20 may be blended with the humidity control substance such that the plant extract 20 is between about 0.025% and about 5.0% by weight of the mixture. In some embodiments, the plant extract 20 may be blended with the humidity control substance such that the plant extract 20 is about 4% by weight of the mixture.

In some embodiments, the plant extract 20 used in the mixture may include substantially pure terpenes (e.g., about 95% to about 100%). Such high concentrations of terpenes may be necessary for creating a mixture capable of infusing terpenes into a product stored in the humidity control system. Terpene mixtures that are typically stored with products are only used to scent the surrounding environment, and only require small terpene concentrations (e.g., about 1 - 30%) to be added to the mixture. Substantially pure terpenes are not used because substantially pure terpenes are cost prohibitive. Additionally, substantially pure terpenes are more volatile and will evaporate at the higher temperatures used when blending the terpene with the humidity control substance. The method disclosed herein can allow for blending substantially pure terpenes with the humidity control substance.

In some embodiments, terpenes may be blended with the humidity control substance 20 using mixing equipment. For example, the mixing equipment may include, but is not limited to, a large mixing container (e.g., a kettle), an agitator, and a homogenizer.

In some embodiments, the mixing container may include a 250 gallon style "D7S" open top, hemispherical bottom kettle manufactured by Lee Industries, Inc. In some embodiments, the agitator may include a "Style #7" agitator manufactured by Lee Industries, Inc. In some embodiments, the homogenizer may include a Model FMM-5 flange-mount batch mixer manufactured by Lee Industries, Inc.

According to various embodiments, the mixture containing the terpene may be added to the package 30 as a liquid, while in other embodiments, the mixture may be added as a gel. The gel terpene mixture may be added to the package 30 using a cylinder pump (e.g., a drum pump). The cylinder pump can regulate the temperature and pressure of the mixture which allows the mixture to be in a gel form before being added to package 30. Further, the cylinder pump can also be configured to dispense the gel mixture in metered amounts. It may be advantageous to add mixtures containing some terpenes as a gel rather than a liquid, because the terpenes may be suspended in the gel mixture longer without evaporating. This improves the consistency of the mixture and prolongs the effectiveness of the terpene in the mixture.

In some embodiments, the cylinder pump may include a pump model 2NHL15PUF manufactured by Lee Industries, Inc. In some embodiments, the cylinder pump may be configured to maintain discharge pressure at about 0.2 MPa and suction pressure at 0 MPa. For example, the cylinder pump may be configured to dispense 15 mL/rev.

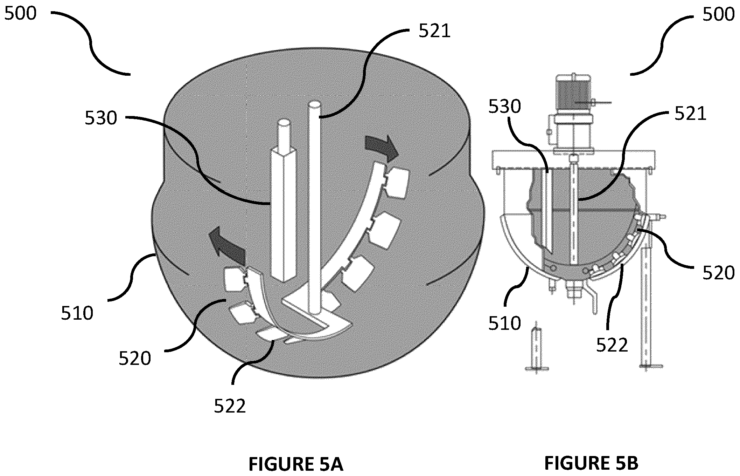

FIGS. 5A and 5B show images of the mixing equipment according to some example embodiments of the present disclosure.

Referring to FIGS. 5A and 5B, the mixing equipment 500 may include a mixing container 510. An agitator 520 be connected to the mixing container 510. The agitator 520 may include a rotator 521 that is positioned at the center of the mixing container 510. The rotator 521 may be further connected to one or more paddles 522 that extend along the boundaries of the inside of the mixing container 510. When activated, the agitator 520 is configured to rotate clockwise or counterclockwise along the axis of the rotator 521. The paddles 522 will travel along the boundaries of the inside of the mixing container 510 and blend the contents of the mixing container 510.

In some embodiments, the mixing equipment 500 may also include a homogenizer 130. The homogenizer 530 may be configured to further mix or blend the contents of the mixing container 510.

In some embodiments, the mixing container 510 may include a 250 gallon style "D7S" open top, hemispherical bottom kettle manufactured by Lee Industries, Inc. In some embodiments, the agitator 520 may include a "Style #7" agitator manufactured by Lee Industries, Inc. In some embodiments, the homogenizer 530 may include a Model FMM-5 flange-mount batch mixer manufactured by Lee Industries, Inc.

According to various embodiments, the process for blending terpene with the humidity control substance 20 may begin by adding purified water to the mixing container 510 of the mixing equipment 500. The water can be agitated (e.g., stirring or mixing) by activating the agitator 520 of the mixing equipment 500. Next, the mixing container 510 may heat up the purified water to a predetermined temperature. The gelatin may then be added to the heated purified water in the mixing container 510 while the agitator 520 is stirring the mixture. After the gelatin has been added, the agitator 520 can mix the water and gelatin mixture.

After mixing the gelatin and water, glycerin can be added to the mixture in the mixing container 510 and mixed. After mixing the glycerin, the temperature of the mixture may be lowered to a predetermined temperature. The terpene may then be added to the mixture in the mixing container 510 and mixed by the homogenizer 530. After mixing the terpene, the mixture should be added to the package 30.

In some embodiments, the amount of purified water used in the process may be about 99.24 lbs. In some embodiments, the mixing container 510 may heat up the purified water to a temperature ranging from about 95°F to about 98°F after being added. In some embodiments, the gelatin may be added to the heated purified water in the mixing container 510 slowly (e.g., added over a span of about 15 minutes) while the agitator 520 is stirring the mixture at about 3015 RPM. In some embodiments, the amount of gelatin added may range from about 1711.58 grams to about 1717.58 grams. In some embodiments, the gelatin and water mixture may be mixed by the agitator 520 at about 3015 rpm for approximately 1 hour and 20 minutes. In some embodiments, the amount of glycerin added may be about 196.98 lbs. In some embodiments, the glycerin can be mixed with the mixture by the agitator 520 at 3015 rpm for approximately 1 hour and 20 minutes. In some embodiments, the temperature of the mixture may be lowered to a maximum of about 80°F after being mixed with the glycerin. In some embodiments, the amount of terpene used in the process may be about 15 pounds or about 5% by weight of the mixture. In some embodiments, the terpene may be mixed by the homogenizer 530 at about 1850 rpm for approximately 30 minutes.

Furthermore, in some embodiments, the plant extract 20 may be blended with glycerin at about 95 degrees F to about 100 degrees F. The plant extract 20 may be at room temperature before blending. After blending the glycerin and plant extract, additional components, such as water, are blended to the glycerin-plant extract mixture. The combined glycerin-plant extract mixture is then contained by the package 30 having the coating 32.

In some embodiments, the glycerin and water may be mixed together to form the humidity control substance 10, and then the plant extract 20 is combined with the humidity control substance 10. According to embodiments, the plant extract 20 is combined with the humidity control substance 10 before it gels.

In some embodiments, the plant extract 20 may be provided in relative quantities such that the plant extract transmits a scent through the package and/or flavors products in the surrounding environment, e.g., tobacco or herbs in the surrounding environment. As such, the humidity control system 1 may provide flavoring and/or scent to unflavored products in the surrounding environment, such as tobacco, or may resupply flavor and/or scent to flavored products in the surrounding environment that have reduced efficacy, e.g., are no longer as flavorful as they once were.

In some embodiments, the humidity control system 1 may include plant extract (e.g., terpenes) in sufficient quantities to prevent or inhibit mold growth in the surrounding environment. For example, the humidity control system 1 may include limonene and/or citronella, which have both been found to inhibit mold growth.

In some embodiments, the humidity control system 1 may include a combination of plant extracts (e.g., terpenes) that provide scents and/or flavors and mold inhibiting features.

In one or more embodiments, the humidity control substance 10 may include a saturated salt solution and glycerin. In some embodiments, the humidity control substance 10 may include a salt solution and an emulsifier or a surfactant. In some embodiments, a salt is added as a 325 mesh powder to a mix of cellulose powder, such as SOLKA-FLOC^{®} 40 grade (SOLKA-FLOC^{®} is a registered trademark of Solvaira Specialty, L.P.). In some embodiments, ascorbic acid powder may also be included to provide for oxygen removal. A solution of glycerin and/or distilled water may be added, which allows for placement in various suitable packages and/or packages with film coated thereon. For example, the solution of glycerin and/or distilled water may be metered into the salt solution using a SANKO^{®} FC-80 packaging machine (SANKO^{®} is a registered trademark of Sanko Machinery Co., Ltd.).

In some embodiments, the humidity control substance 10 also includes a gelling agent. The gelling agent may be a food hydrocolloid. For example, the gelling agent may be any one of gelatin, xanthan, alginate, and/or pectin. The gelling agent may increase viscosity of the humidity control substance 10 and/or the glycerin-plant extract mixture and may reduce or minimize the likelihood of the humidity control substance 10 and/or the glycerin-plant extract mixture leaching through the coating 32 and the package 30.

It will be appreciated that although reference is made herein to a plant extract 20, that the plant extract may be material that is extracted from a plant, or may be synthetic or man-made such that is has the same or substantially the same properties as various plant extracts.

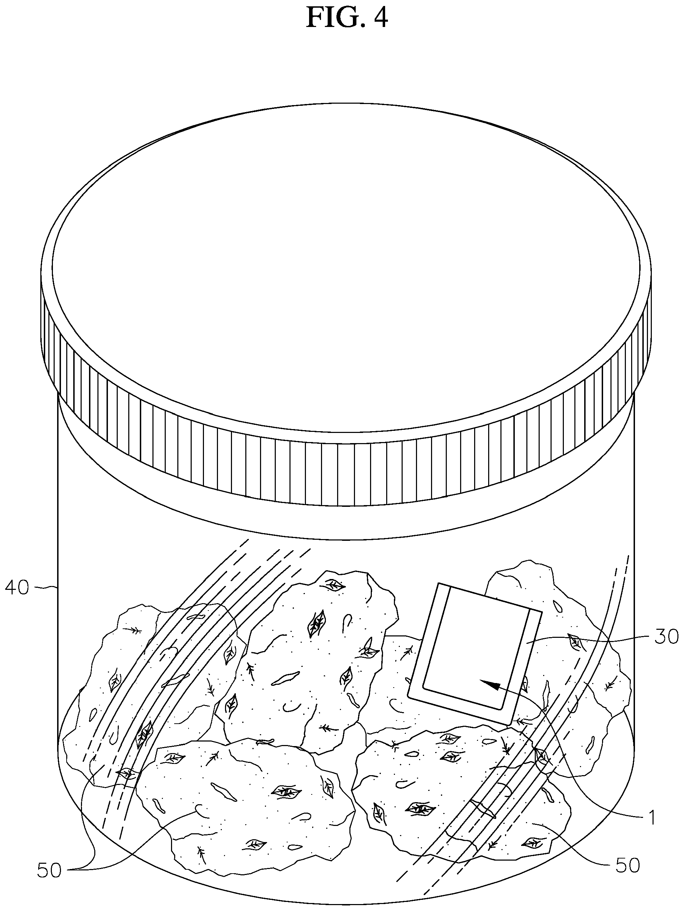

According to embodiments of the invention, referring to FIG. 4, the humidity control system 1 may be placed in a container 40 along with a product 50. The container 40 may be, for an example, an air-tight container, a humidor, etc. The product 50 may be, for example, tobacco, herbs, dried food products, etc. The humidity control system 1 and the product 50 may both be inserted into the container 40, and the container 40 may be then be closed. The humidity control system 1 having the humidity control substance 10 and the plant extract 20 then controls the relative humidity inside of the container 40, and provides the plant extract 20 (e.g., an essence of the plant extract 20) to the environment inside of the container 40, which may then flavor the product 50, provide fragrance to the surrounding environment or product 50, and/or inhibit mold growth inside the container 40, etc.

In some embodiments, a humidity indicating card may be affixed to the humidity control system 1, such as the humidity indicating card disclosed in U.S. Patent No. 9,618,456, to Desiccare, Inc., which is incorporated herein by reference in its entirety.

As disclosed in U.S. Patent No. 9,618,456, to Desiccare, Inc., the humidity indicating card may have a front surface and a back surface. In some embodiments, the front surface may include humidity indicators that change color according to a level of humidity in the humidity control system 1. The back surface faces away from the front surface. When used in the humidity control system 1, the humidity indicating card may be exposed to moisture in the system. The moisture can cause leakage of chemicals used by the humidity indicators on the humidity indicating card. To prevent leakage of the chemicals, the humidity indicating card may be laminated by a material that can reduce or minimize the likelihood of leakage of the chemicals used by the humidity indicating card (e.g., a laminating membrane). In some embodiments, the front surface and the back surface of the humidity indicating card may be laminated with the laminating membrane. In some embodiments, the laminating membrane may include the material disclosed herein for the coating 32 of FIGS. 1-3. For example, the laminating membrane may be selected such that it provides adequate moisture vapor transmission (MVT) so that it may seal the front surface and the back surface of the humidity indicating card. The laminating membrane also reduces or minimizes the likelihood of leakage of chemicals used by the humidity indicating card. The laminating membrane may be a polymer blend. In some embodiments, the laminating membrane may be polyethylene, oriented polystyrene, a porous polyethylene resin, polyurethane, a polyether block amide, and/or a polymeric mixture including a hydrophilic monomer. Additionally, the laminating membrane may be suitable for contact with food and compliant with the Food and Drug Administration (FDA) standards, e.g., the regulations as stated in the Code of Federal Regulations, Title 21.

The laminating membrane can be laminated (e.g., fixed) to the surface of the humidity indicating card using various processes. In some embodiments, the laminating membrane may be a film on a roller, and can be extended across the front and back surfaces of the humidity indicating card and laminated to the surfaces of the humidity card.

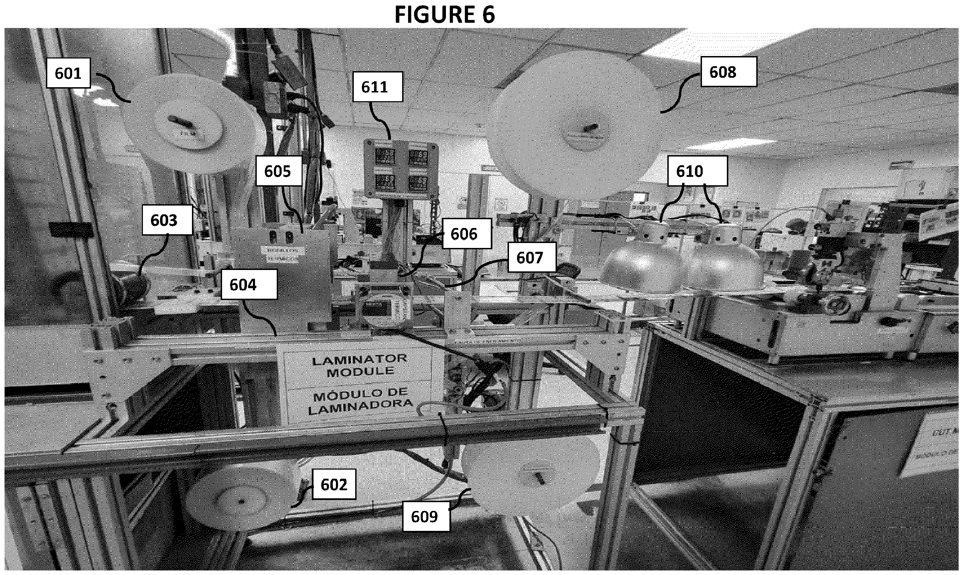

FIG. 6 shows an image of the laminating machine that can be used to laminate the humidity indicating card with the laminating membrane according to an embodiment of the present disclosure.

Referring to FIG. 6, the laminating machine 600 may include: an upper membrane roll 601, a lower membrane roll 602, a guide roller 603, a guide fixture 604, upper and lower heating rollers 605, capstan heating rollers 606, cooling pipe 607, upper nylon collector 608, lower nylon collector 609, infrared (IR) heat lamps 610, and temperature controls 611. The upper membrane roll 601 may include an upper laminating membrane 611 and the lower membrane roll 601 may include a film of the lower laminating membrane 612. The humidity indicating cards can move through the laminating machine 600 at varying speeds depending on the substrate. In some embodiments, the laminating machine 600 can process about 20 to 40 humidity indicating cards per minute.

The upper and lower laminating materials 611, 612 may include the material disclosed herein for the coating 32 of FIGS. 1-3. For example, the upper and lower laminating materials 611, 612 may be selected such that it provides adequate moisture vapor transmission (MVT) so that it may seal the front surface and the back surface of the humidity indicating card. The laminating membranes 611, 612 may be a polymer blend. In some embodiments, the laminating membranes 611, 612 may include polyethylene, oriented polystyrene, a porous polyethylene resin, polyurethane, a polyether block amide, and/or a polymeric mixture including a hydrophilic monomer.

Additionally, the upper and lower laminating materials 611, 612 may also include a backing layer that can separate a first layer of the laminating membrane from a second layer of the laminating membrane when the laminating membrane is on a roll, which prevents the first layer from adhering (e.g., sticking) to the second layer. In some embodiments, the backing layer may include a nylon membrane or film release liners that are silicon based coatings.

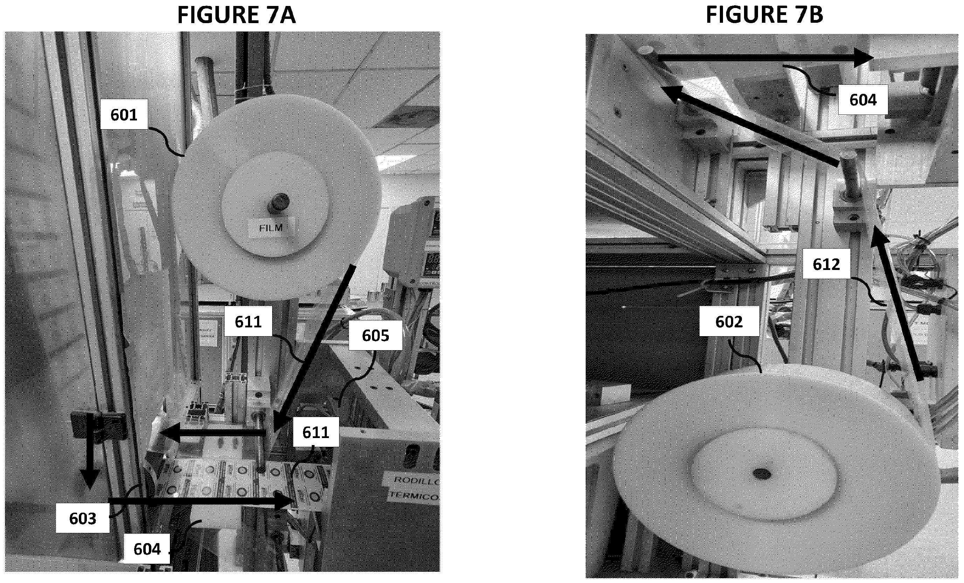

FIGS. 7A and 7B show images of the laminating machine performing some steps of the laminating process according to an embodiment of the present disclosure.

As shown in FIG. 7A, the upper membrane 601 may include a film of upper laminating membrane 611. The upper membrane roll 601 can provide the upper laminating membrane 611 to the guide roller 603. The guide roller 603 directs the upper laminating membrane 611 to a front surface of the humidity indicating cards 613 (e.g., a surface including the indicators). The humidity indicating cards 613 may be positioned along the guide fixture 604. The humidity indicating cards 613 with the upper laminating membrane 611 can be directed to the upper and lower heating rollers 605.

As shown in FIG. 7B, the lower membrane roll 602 may include a film of a lower laminating membrane 612. The lower membrane roll 602 can supply the lower laminating membrane 612 to a back surface of the humidity indicating cards 613 (e.g., a surface that faces away from the front surface). The guide fixture 604 positions the humidity indicating cards so the lower laminating membrane 612 can be placed on the back surface. The humidity indicating cards 613 with the lower laminating membrane 611 can be directed to the upper and lower heating rollers 605.

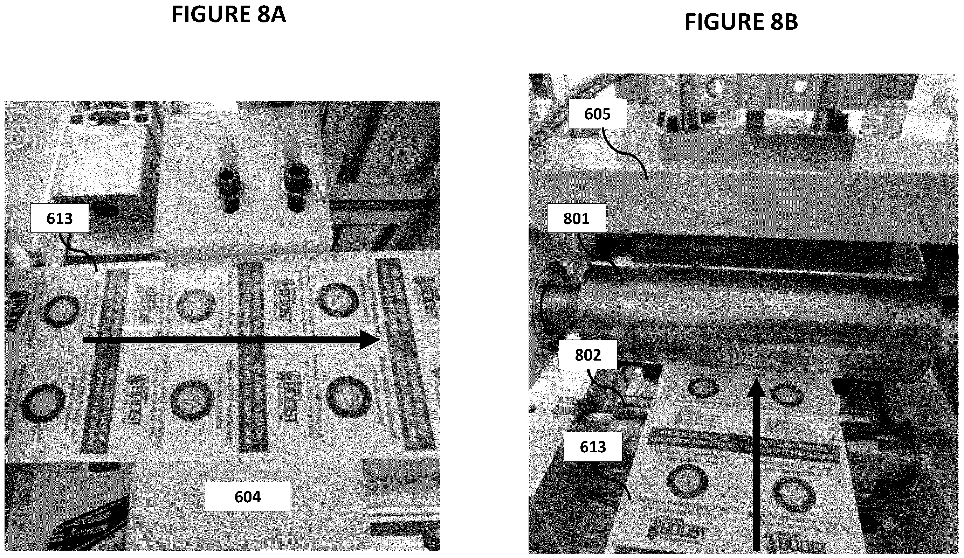

FIGS. 8A and 8B show images of the humidity indicating cards inserted into the upper and lower heating rollers according to an embodiment of the present disclosure.

Referring to FIG. 8A, the humidity indicating cards 613 are positioned along the guide fixture 604. The humidity indicating cards 613 may have an upper laminating membrane 611 positioned on the front surface of the humidity indicating cards 613 and a lower laminating membrane 612 positioned on the back surface of the humidity indicating cards 613.

As shown in FIG. 8B, the humidity indicating cards 613 with the upper and lower laminating membranes 611, 612 are directed to the upper and lower heating rollers 605. The upper and lower heating rollers 605 may include an upper heating roller 801 and a lower heating roller 802. The upper heating roller 801 can be configured to come into contact with the front surface of the humidity indicating cards 613. The lower heating roller 802 can be configured to come into contact with the back surface of the humidity indicating cards 613. In some embodiments, the upper heating roller 801 may be heated to a temperature of about 220° Fahrenheit. In some embodiments, the lower heating roller 802 may be heated to a temperature of about 235° Fahrenheit. The humidity indicating cards 613 may be directed between the upper and lower heating rollers 801, 802. The upper heating roller 801 may apply heat and pressure to the upper laminating membrane 611 positioned on the front surface. The lower heating roller 802 may apply heat and pressure to the lower laminating membrane 612 positioned on the back surface. The heat and pressure applied to the upper and lower laminating membranes 611 and 612 heat the laminating membranes 611, 612, which prepares the upper and lower laminating membranes 611 and 612 for lamination to the front and back surfaces of the humidity indicating cards 613 respectively.

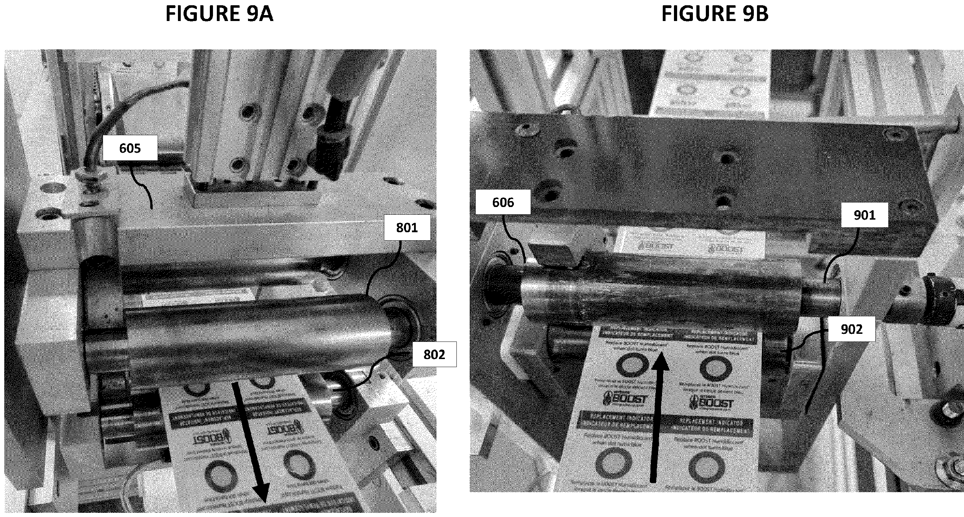

FIGS. 9A and 9B show images of the humidity indicating cards inserted into capstan heating rollers according to an embodiment of the present disclosure.

Referring to FIGS. 9A and 9B, the humidity indicating cards 613 are directed from the upper and lower heating roller 605 toward the capstan heating rollers 606. The capstan heating rollers 606 may include an upper capstan heating roller 901 and a lower capstan heating roller 902. In some embodiments, the upper capstan heating roller 901 may be heated to a temperature of about 270° Fahrenheit. In some embodiments, the lower capstan heating roller 902 may be heated to a temperature of about 260° Fahrenheit. The humidity indicating cards 613 may be directed between the upper and lower capstan heating rollers 901, 902. The upper capstan heating roller 901 may apply heat and pressure to the upper laminating membrane 611 positioned on the front surface. The lower capstan heating roller 902 may apply heat and pressure to the lower laminating membrane 612 positioned on the back surface. The heat and pressure applied by the capstan heating rollers 606 may further heat the upper and lower laminating membranes 611 and 612 such that the upper and lower laminating membranes 611 and 612 can laminate to the front and back surfaces of the humidity indicating cards 613 respectively.

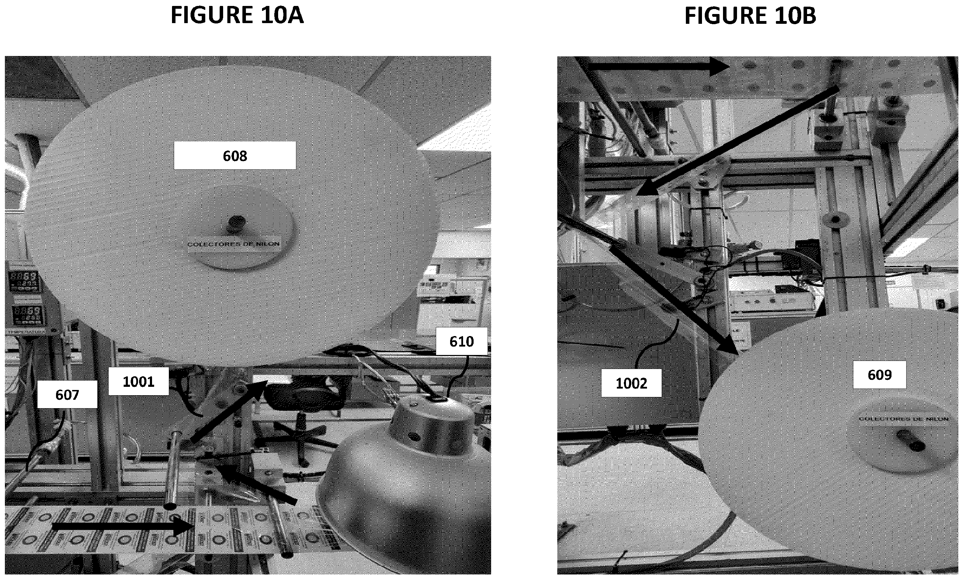

FIGS. 10A and 10B show images of a backing layer being removed from upper and lower laminating membranes according to an embodiment of the present disclosure.

Referring to FIGS. 10A and 10B, the humidity indicating cards 613 can move adjacent to the cooling pipe 607. In some embodiments, the cooling pipe 607 can have small holes that allow for air movement that can cool (e.g., lower the temperature) the upper humidity indicating cards 613. Additionally, the heating of the upper and lower laminating membranes 611, 612 by the upper and lower heating rollers 605 and the capstan heating roller 606 can release a backing layer of each membrane. As described previously, the backing layer can separate a first layer of the laminating membrane from a second layer of the laminating membrane when the laminating membrane is on a roll, which prevents the first layer from adhering (e.g., sticking) to the second layer. In some embodiments, the backing layer may include a nylon membrane. The nylon membranes of the laminating membranes 611, 612 may be separated from the humidity indicating cards 613 after being heated as shown in FIGS. 10A and 10B. For example, an upper nylon membrane 1001 can be separated from the upper laminating membrane 611 and collected at an upper nylon collector 608. Similarly, as shown in FIG. 10B, a lower nylon membrane 1002 can be separated from the lower laminating membrane 612 and collected at a lower nylon collector 609.

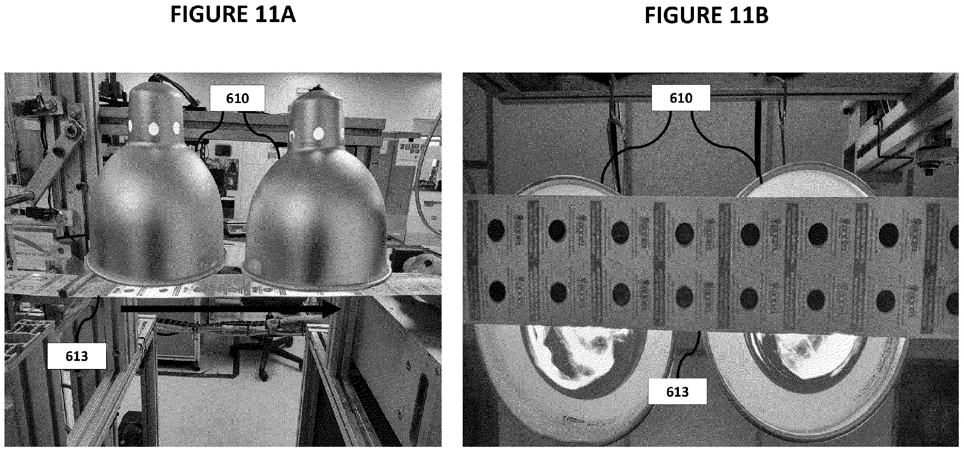

FIGS. 11A and 11B show images of the humidity indicating cards exposed to IR heat lamps according to an embodiment of the present disclosure.

Referring to FIGS. 11A and 11B, the humidity indicating cards with the upper and lower laminating membranes 611, 612 can be exposed to IR heat lamps 610. In some embodiments, the front surface of the humidity indicating cards may be facing the IR heat lamps 610. In some embodiments, the humidity indicating cards may be exposed to the IR heat lamps 610 in a range from about one second to about four seconds while the IR heat lamps are heated to a temperature of up to about 270° Fahrenheit. The IR heat lamps 610 can provide additional heat for curing after the nylon backings have been removed, which can prevent or reduce damage to the visual appearance of the ink on the humidity indicating cards 613.

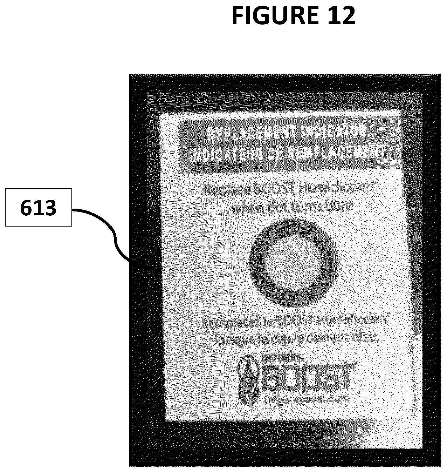

FIG. 12 shows a humidity card laminated with a laminating membrane according to an embodiment of the present disclosure.

Referring to FIG. 12, the humidity indicating card 613 may be laminated using the processes disclosed herein. The humidity indicating card 613 may have an upper laminating membrane laminated to a front surface of the humidity indicating card 613 and a lower laminating membrane laminated to a back surface of the humidity indicating card 613. The laminating membranes can help prevent or reduce leakage of chemicals used by indicators on the humidity indicating card 613.

While this disclosure has been described in detail with particular references to some exemplary embodiments thereof, the exemplary embodiments described herein are not intended to be exhaustive or to limit the scope of the disclosure to the exact forms disclosed. It is understood that the drawings are not necessarily to scale. Persons skilled in the art and technology to which this disclosure pertains will appreciate that alterations and changes in the described structures and methods of assembly and operation can be practiced without meaningfully departing from the principles, spirit, and scope of this disclosure, as set forth in the following claims and their equivalents.

## Claims

1. A humidity control system comprising:
a two-way humidity control material;
a substantially pure plant extract blended with the two-way humidity control material to form a mixture; and
a package housing the two-way humidity control material and the substantially pure plant extract.

2. The humidity control system of claim 1, wherein the package comprises a nonwoven fabric.

3. The humidity control system of claim 2, wherein the nonwoven fabric comprises polyethylene and/or polypropylene.

4. The humidity control system of claim 3, wherein the nonwoven fabric comprises polyethylene and a polypropylene spunbound material.

5. The humidity control system of claim 1, wherein the two-way humidity control material comprises a viscous miscible glycerol and water mix.

6. The humidity control system of claim 1, wherein the two-way humidity control material comprises a saturated salt solution.

7. The humidity control system of claim 1, further comprising ascorbic acid, the ascorbic acid being housed in the package with the two-way humidity control material and the substantially pure plant extract.

8. The humidity control system of claim 1, further comprising a humidity indicating card affixed to the package.

9. The humidity control system of claim 1, wherein the substantially pure plant extract is between about 0.025% and about 5.0% by weight of the mixture.

10. The humidity control system of claim 1, wherein the substantially pure plant extract comprises a substantially pure terpene.

11. The humidity control system of claim 10, wherein the substantially pure terpene comprises one or more of Linalool, Myrcene, a-Pinene, Humulene, and Beta-Caryophyllene.

12. A method of flavoring a product and controlling humidity of an environment in a container, the method comprising:
inserting a humidity control system in the container, the humidity control system comprising:
a two-way humidity control material;
a substantially pure plant extract blended with the two-way humidity control material to form a mixture; and
a package housing the two-way humidity control material and the substantially pure plant extract; and
enclosing the product in the container.

13. A method of manufacturing a humidity control mixture, the method comprising:
adding water to a mixing container;
activating an agitator in the mixing container;
heating the mixing container to a first predetermined temperature;
adding gelatin to the mixing container;
adding glycerin to the mixing container;
cooling the mixing container to a second predetermined temperature;
adding a substantially pure plant extract to the mixing container; and
activating a homogenizer in the mixing container.

14. A humidity indicating card comprising:
a first surface comprising a humidity indicator; and
a second surface, wherein the first surface and the second surface face different directions, and
wherein the first surface and the second surface of the humidity indicating card are laminated with a laminated membrane configured to reduce leakage of chemicals in the humidity indicator.

15. A method for laminating a humidity indicating card, the method comprising:
placing an upper laminating membrane on a first surface of the humidity indicating card comprising a humidity indicator;
placing a lower laminating membrane on a second surface of the humidity indicating card, wherein the first surface and the second surface face different directions;
heating the upper and lower laminating membranes using a first set of heating rollers;
heating the upper and lower laminating membranes using a second set of heating rollers;
removing an upper backing layer from the upper laminating membrane and a lower backing layer from the lower laminating membrane; and
heating the upper and lower laminating membranes using an infrared heating apparatus for four seconds or less.
